Europäisches Patentamt

(19) European Patent Office

Office européen des brevets

(11) Publication number: **0 064 846**
A2

(12) **EUROPEAN PATENT APPLICATION**

(21) Application number: 82302233.0

(22) Date of filing: 29.04.82

(51) Int. Cl.³: **B 22 F 5/00**
**B 22 F 7/08, H 02 K 15/02**

(30) Priority: 01.05.81 US 259737

(43) Date of publication of application:
17.11.82 Bulletin 82/46

(84) Designated Contracting States:
DE FR GB

(71) Applicant: XEROX CORPORATION
Xerox Square - 020
Rochester New York 14644(US)

(72) Inventor: Chai, Stephen Ta-Chen
4223 Exultant Drive
Rancho Palos Verdes California 90274(US)

(72) Inventor: Demeny, Michael G.
451 W. Valley View Drive
Fullerton California 92632(US)

(72) Inventor: Jones, John E.
2920 Laurel Avenue
Manhattan Beach California 90266(US)

(74) Representative: Weatherald, Keith Baynes et al,
European Patent Attorney Rank Xerox Patent
Department 338 Euston Road
London NW1 3BH(GB)

(54) Method of making motor stator.

(57) A method of making a single piece stator (2) for electric motor utilizes a die cavity having a castellated inner surface and radially extending portions along its outer surface. A magnetic material filling the die cavity is sintered after a first densification and prior to a second densification and prior to a second densification, and wire having a heat bondable material over electrical insulation is used to size the interior diameter of the stator.

FIG. 1

EP 0 064 846 A2

-1-

## METHOD OF MAKING MOTOR STATOR

Torque motors are either dc commutator or brushless synchronous machines operated in the torque (zero or low-speed) mode. The stators of conventional torque motors include a high silicon steel toroidal core constructed of either circular individual laminations or tape wound from a continuous strip. After formation, the stator core is toroidally wound with an appropriate number of coils for its rotor and application, and is then surface encapsulated in an electrically insulating material to provide electrical insulation and mechanical strength and to control the internal diameter clearance for its rotor. Mounting brackets and, in some instances, cooling fins are then attached to the stator.

Torque motor stators of the foregoing conventional construction are subject to thermal and mechanical distortions. Although the peak torque of a torque motor is limited by magnetic saturation of the stator core, the continuous torque of the motor is limited by excess heat generation the motor. Encapsulation of the stator core and coils impedes the dissipation of heat produced by the operating current in the motor windings, thereby promoting thermal rise and thus limiting continuous torque. Mechanical distortions result in part from inadequate provisions for mechanically mounting of the stators requiring separate mounting brackets, and from the use of different materials for the stator core, encapsulant, and mounting brackets. Those different materials react differently to thermal rise due to their different coefficients of thermal expansion, and such differing reactions produce mechanical distortions. Since the clearance between the stator and rotor of torque motors is very slight, mechanical distortions can result in motor failure.

In addition to the distortion drawbacks of conventional torque motor stators, such stators have an economic drawback due to the high cost and complexity of their process of manufacture. Also, it can be difficult to control the internal diameter of the stator, thereby making it difficult to provide the desired very slight stator/rotor clearance.

- 2 -

In accordance with the invention, a single cavity mold or die and high purity powered iron are used to provide a low cost, single piece, sintered toroidal core for the stator of a torque motor. The mold for the core provides for axial through holes for mounting, and integral heat radiating fins. Castellation of the mold surface permits the stator windings to be sufficiently removed from the toroidal surface such that flush mounting can be achieved conveniently without the need to encapsulate the entire assembly. The integral mounting and heat dissipation arrangements, and the limited encapsulation, significantly reduce mechanical and thermal distortions, thus contributing to increasing the available continuous torque of the motor. The present invention also substantially reduces the cost of mounting, centering, and subsequent assembly of the motor into its final configuration, as well as simplifying the attachment of ancillary devices, such as position and velocity transducers.

The present invention will now be described by way of example with reference to the accompanying drawings, in which:

Figure 1 is a perspective view of a motor stator during one step of the processing thereof;

Figure 2 is a perspective view of a wired motor stator;

Figures 3A-3D are sectional views depicting the steps of making a motor stator;

Figure 4 is a perspective view depicting further processing of a wired motor stator, and

Figure 5 is a plan view of a die used in the process of making a stator motor.

The motor stator and its method of manufacture will be described in relation to a four-pole torque motor. It is contemplated, however, that the invention will apply equally to motors having more or less than four-poles, and to tachometers.

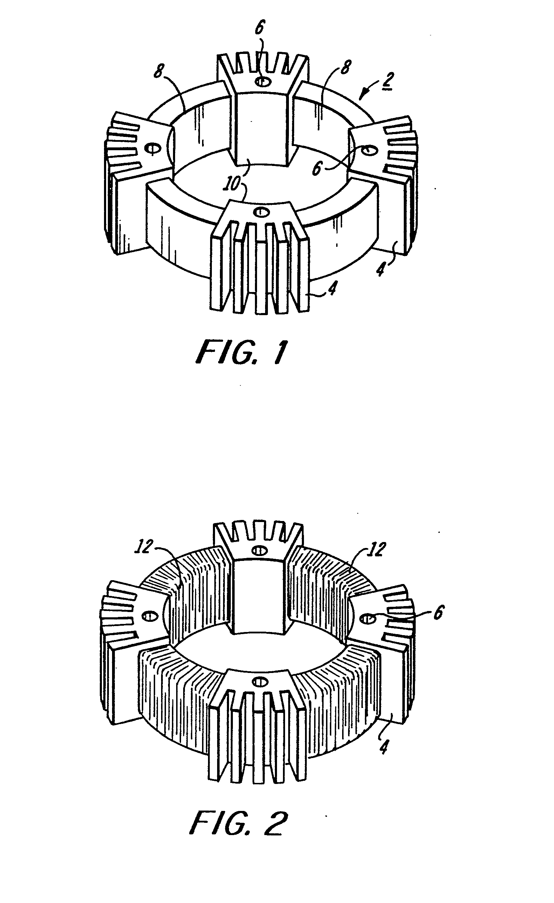

Referring now to Figure 1, there is shown a single piece toroidal stator core 2 made of highly compressed and sintered high purity powdered iron or powdered iron and other powdered material to improve magnetic properties. Core 2 includes heat radiating fins 4 and is provided with axial through holes 6 for mounting. In addition, core 2 is in a castellated form,

-3-

having crennelled portions 8 and merlon portions 10. As shown in Figure 2, each of the crennelled portions 8 is encircled with a toroidally wound stator coil 12. Each coil 12 is comprised of          wire of appropriate gauge for the motor application, and preferably the wire has a heat or solvent-activated bondable coating over its electrical insulation.

The integral heat radiating fins 4 and the holes 6 respectively obviate the need for separate cooling and mounting attachments, such that mechanical and thermal distortions are reduced during stator operation, making it possible to increase the available continuous torque of a motor using the disclosed stator. By winding the stator coils within the crennelled portions 8 of the stator core 2 and by overcoating the stator coils with a heat or solvent-activated bondable coating, the stator will have a substantially smooth inner surface thereby permitting, without the need to totally encapsulate the stator, accurate stator/rotor clearance.

Due to the employment of a powdered metal as the stator material, the entire toroidal stator core can be fabricated completely in a single cavity mold with no need for additional secondary machining operations. Thus, the stator of the invention will have a reduced cost relative to conventional stators.

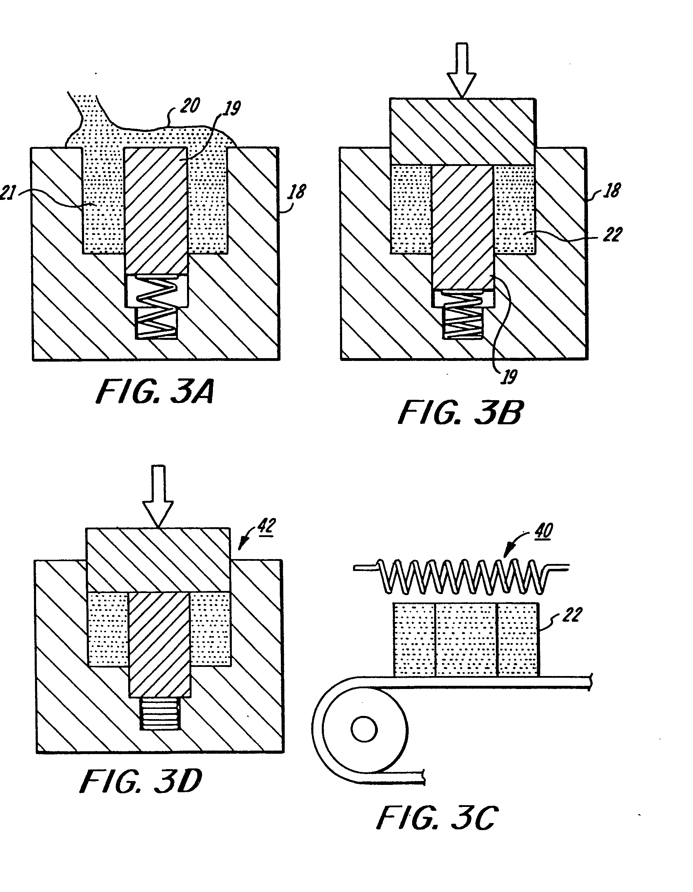

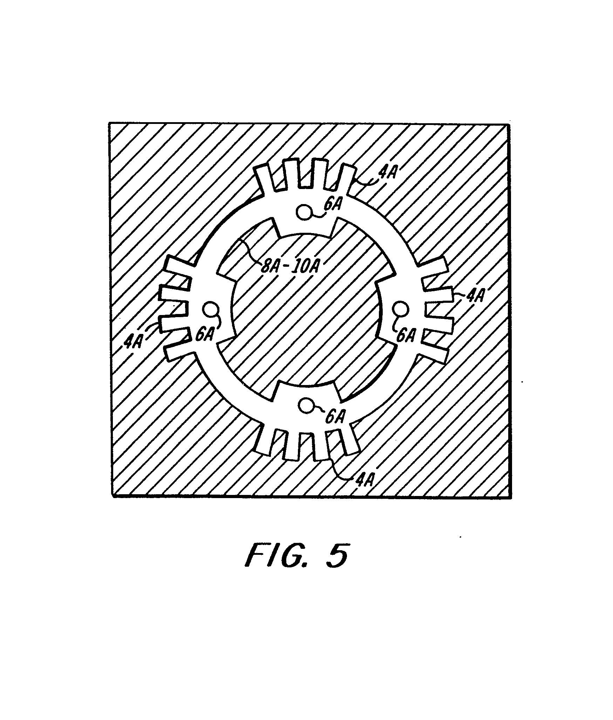

Fabrication of the stator is initiated by the formation of a die 18 having a spring loaded center 19 and a generally toroidal cavity 21 shaped to correspond to the desired shape of the stator core. Specifically, as shown in Figure 5, cavity 21 has an outer surface with radially extending portions 4A to provide for cooling fins and an inner surface that is castellated 8A-10A. Pins 6A extend axially into the cavity adjacent the radially extending portions 4A to provide for mounting holes. The material of the die can be tungsten carbide. As shown in Figure 3A, cavity 21 of die 18 is filled with high purity, high compressibility, sinterable iron powder 20, such as, for example, Ancorsteel 1000B. Powder 20 could be a mixture of iron powder and ferro-phosphorous powder, such as, for example, Ancorsteel 45P, which would provide a stator with improved magnetic properties and would permit reduced compacting pressure, sintering time and sintering temperature. The material filling cavity 15 is now compressed (Figure 3B) to a "green"

-4-

preform having a density on the order of 7.3 g/cm$^3$. The preform 22 is now ejected from the die and placed in a furnace 40 (Figure 3C) with a controlled-atmosphere, such as an inert gas, until sintered. The sintering temperature and time would depend upon the content of powder 20, a temperature of about 1,120°C for about thirty (30) minutes will adequately sinter Ancorsteel 45P. The phosphorous content of Ancorsteel 45P is controlled at a level where there is little change in the preform size during sintering, thereby permitting good dimensional control.

Following sintering, the preform is transferred (Figure 3D) to a hot press forge 42 operating at a temperature, for example, 1100°C, and a pressure, for example, of 517MN/m$^2$ that will remove voids and ensure complete densification of the powder 20, such density being about 8.6g/cm$^3$ when Ancorsteel 45P is used. It is important that the transfer time between furnace and press is at a minimum if atmosphere protection is not provided. Too long an exposure would cause penetration of oxide along the interconnecting pores of the preform, which is still relatively porous before densification by the press.

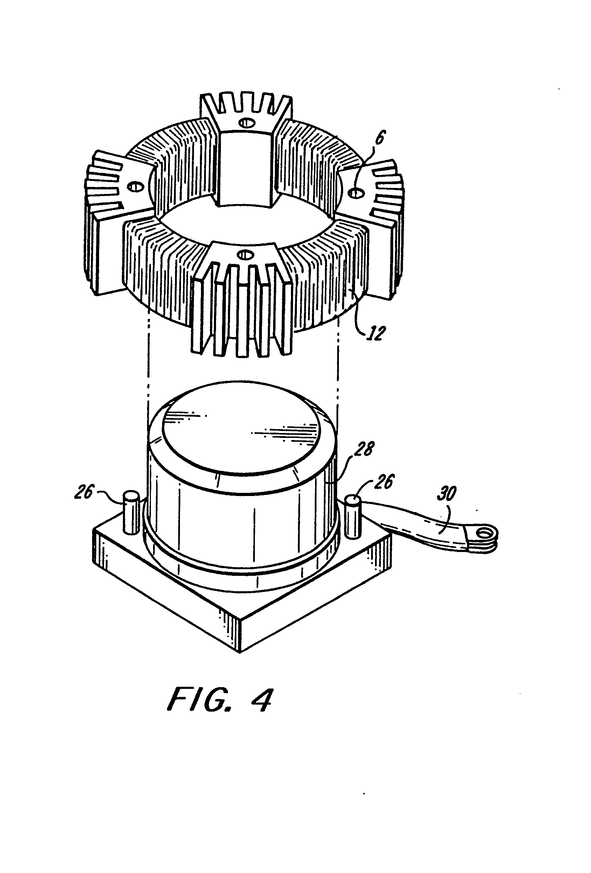

When ejected from the press, the preform has the configuration of the stator core of Figure 1. Now the stator core is coated (not shown) with a thin 0.05-0.1mm layer of an electrical insulating material, such as by dipping the stator core in a varnish or epoxy bath. This insulating layer prevents shorting of the stator coils 12 should a portion of any of them be nicked or cut during the conventional winding process which results in the stator device of Figure 2. As noted, the stator coils are formed preferably from wire having a heat or solvent-activated bondable coating over electrical insulation. When such wire is used for the stator coils, the next step in the manufacturing process is to form and precision size the inside diameter of the stator. As shown in Figure 4, such precision sizing is achieved by inserting into mounting holes 6 the registration pins 26 of a forming mandrel 28 having an outside diameter corresponding to the desired inside diameter of the stator. In effect, the mandrel 28 will contact stator coils 12 and force them into the desired radial position. The radial position of the stator coils is now permanently fixed, such as by heating the mandrel via wires 30 when the stator coils have a heat activated bondable coating thereon.

As described, the entire stator coil is fabricated using a single mold with no need for additional secondary machining operations. This approach not only reduces substantially the cost of the torque motor stator, but substantially simplifies and reduces the cost of both mounting (mounting holes are integral to the stator core) and heat dissipation (cooling fins are integral to the stator core). Also, mechanical and thermal distortions are limited, since the stator core, mounting means and cooling means are all of the same material, thereby increasing the continuous torque limits of a motor using this stator.

-1-

Claims

1.      A method of making a stator for a motor or like rotary machine by a sintering process including the steps of:

forming a die with a cavity the outer surface of which has radially-extending portions and the inner surface of which is castellated, and having pins extending parallel to the axis of the stator,

filling said cavity with a sinterable powder having magnetic properties,

compressing said powder to a cohesive mass having a first density,

heating said cohesive mass to provide a sintered mass,

compressing said sintered mass to a second density greater than said first density, and

encircling portions (8) of the highly compressed sintered mass with wire coated with an insulating material.

2.      A method as claimed in claim 1, including the steps of using wire having a heat activated bondable material over electrical insulation,

inserting a heatable mandrel into the center of said compressed sintered mass with encircling wires, and

heating said mandrel sufficiently to activate said bondable material to cause the windings (12) to present part-cylindrical surfaces having a common radius.

3.      A rotary electrical machine having a rotor and a stator (2), in which the stator is made from an integral mass of sintered material having heat exchange portions (4) angularly spaced apart by arcuate portions on which are disposed windings (12) of insulated wire.

4.      A machine as claimed in claim 3, in which the wire is provided with an additional or substitute heat-bondable coating, and in which the stator has been subjected to a heat-shaping process by which the wires become bonded together and cooperate with portions (4) to define a dimensionally-stable hollow cylindrical surface to receive a rotor with little and uniform radial clearance.

5.      A machine as claimed in claim 3 or 4, in which each heat exchange portion (4) is formed with a plurality of longitudinal and radial fins (4).

6.      A machine as claimed in any of claims 3-5, in which each portion (4) has in it a passageway (6) extending parallel with the stator axis for receiving a mounting bolt or like device.

FIG. 1

FIG. 2

FIG. 3A

FIG. 3B

FIG. 3D

FIG. 3C

FIG. 4

FIG. 5